# EUROPÄISCHE PATENTSCHRIFT

(11) **EP 1 761 364 B1**
(45) Veröffentlichungstag und Bekanntmachung des Hinweises auf die Patenterteilung: **18.06.2014**
(21) Anmeldenummer: 04803770.9
(22) Anmeldetag: 11.12.2004
(51) Int. Cl.: B25J 19/00, H02G 11/00

(54) **VORRICHTUNG ZUM FÜHREN EINES SCHLAUCHES**
DEVICE FOR GUIDING A FLEXIBLE HOSE
DISPOSITIF POUR GUIDER UN TUYAU

(30) Priorität: 15.06.2004 DE 102004028577
(43) Veröffentlichungstag der Anmeldung: 14.03.2007
(73) Patentinhaber: Leoni Elocab GmbH, 91166 Georgensgmünd (DE)
(72) Erfinder: BURLOT, Claude, F-78830 Bullion (FR)
(74) Vertreter: FDST Patentanwälte
(86) Internationale Anmeldenummer: PCT/EP2004/014130
(87) Internationale Veröffentlichungsnummer: WO 2005/123350

(56) Entgegenhaltungen:
- EP-A- 1 304 195
- DE-U1- 20 113 742
- US-B1- 6 217 375
- PATENT ABSTRACTS OF JAPAN Bd. 2002, Nr. 07, 3. Juli 2002 (2002-07-03) -& JP 2002 067828 A (YAZAKI CORP), 8. März 2002 (2002-03-08)

## Beschreibung

Die Erfindung betrifft eine Vorrichtung zum Führen eines mehrere Versorgungsleitungen aufweisenden Schlauches eines Industrieroboters, mit einem Führungselement, in welchem der Schlauch beweglich gegen die Rückstellkraft eines Rückstellelements geführt ist. Die Erfindung betrifft weiterhin einen Industrieroboter mit einer solchen Vorrichtung.

Eine derartige Vorrichtung ist aus der EP 1 369 211 A1 bekannt und wird eingesetzt, um die bei der Zuführung eines Schlauches oder einer schlauchförmigen Versorgungsleitung zu einem beweglichen Maschinenteil notwendige Längenvariabilität zu gewährleisten. Insbesondere die Zuführung einer Versorgungsleitung zu einer Roboterhand erfordert hierbei aufgrund der vielen Bewegungsfreiheitsgrade eine sehr hohe Längenvariabilität der Versorgungsleitung. Insbesondere ist die Vorrichtung hinsichtlich der Gewährleistung einer sicheren Zuführung bei hoher Belastung durch Druck, Zug, Verwindung und Abrieb konstruiert.

Für eine Roboterhand oder für ein von der Hand gehaltenes Roboterwerkzeug sind eine Vielzahl von Versorgungsleitungen notwendig. Diese sind üblicherweise in einem Schlauch, beispielsweise ein Wellrohr, geführt und zusammengefasst. Der Schlauch mit den Versorgungsleitungen wird auch als Schlauchpaket und die Versorgungsleitungen werden auch als Schlauchkomponenten bezeichnet. Der Roboterhand oder dem Werkzeug müssen elektrische Energie, Steuersignale oder Arbeitsmittel wie Wasser, Öl oder Luft zugeführt werden. Aus der EP 1 369 211 A1 ist es bekannt, die Versorgungsleitungen zu bündeln und in einem gemeinsamen Schlauch oder Schutzschlauch zu führen. Der Schutzschlauch wird in einer Rinne mit durchgehender seitlicher Längsöffnung in Längsrichtung beweglich geführt. Über die seitliche Öffnung werden die einzelnen Versorgungsleitungen dem Schutzschlauch zugeführt. Der Schutzschlauch selbst wird von einer diesen umgebenden Spannfeder gegen die Rinne abgestützt. Bei Zugbeanspruchung werden der Schutzschlauch und die in diesem angeordneten Versorgungsleitungen längs der Rinne gegen die Federkraft nach vorne gezogen. Bei Längenverkürzung durch entsprechende Bewegung des Roboterarms werden der Schutzschlauch und die Versorgungsleitungen durch die Federkraft zurückgeholt. Während der Schutzschlauch in der Rinne geführt wird, laufen die dem Schutzschlauch zugeführten Versorgungsleitungen entlang der seitlichen Öffnung mit.

Die EP 1 304 195 A1 offenbart eine Vorrichtung zum Führen eines mehrere Versorgungsleitungen aufweisenden Schlauches eines Industrieroboters, die einen durch ein Gehäuse gebildeten Ausgleichsabschnitt aufweist. Jedoch müssen die einzelnen Leitungen an einer Schnittstelle in dem Gehäuse gekoppelt werden.

Aufgabe der Erfindung ist es, eine zuverlässige Führung eines Schlauches mit Längenausgleich sowie ein schneller Austausch des Schlauchpakets zu ermöglichen*.*

Diese Aufgabe wird erfindungsgemäß gelöst durch eine Vorrichtung mit den Merkmalen des Anspruchs 1. Dazu weist die Vorrichtung ein Führungselement auf, in dem der Schlauch beweglich zur Ermöglichung eines Längenausgleichs gegen die Rückstellkraft eines Rückstellelements geführt ist. Das Führungselement weist einen axialen Führungsabschnitt sowie einen sich an den Führungsabschnitt anschließenden durch ein Gehäuse gebildeten Ausgleichsabschnitt auf. Im axialen Führungsabschnitt wird der Schlauch in seiner axial- oder Längsrichtung geführt, wohingegen die gegebenenfalls weiterhin im Schlauch geführte Versorgungsleitung im Ausgleichsabschnitt - in Bezug auf die Längsrichtung - seitlich umgelenkt wird. Das Umlenken ist hierbei über ein axiales Teilstück möglich, wodurch ein Längenausgleich gegeben ist, insbesondere zwischen einer ortsfesten Anschlussstelle für die Versorgungsleitung und einem über die Versorgungsleitung angeschlossenen beweglichen Werkzeug an einer Roboterhand.

Durch die Ausbildung des Führungselements aus zwei Teilabschnitten wird eine besonders sichere und zuverlässige Führung des Schlauches bzw. der Versorgungsleitung sowohl in axialer als auch in seitlicher Richtung gewährleistet. Insbesondere durch die geführte Umlenkung im Ausgleichsabschnitt, in dem der Längenausgleich erfolgt, ist eine störungsfreie und verschleißarme Führung des Schlauches auch in hochbeanspruchten Umgebungen z.B. eines Industrie-Schweißroboters gewährleistet.

Durch die Ausgestaltung des Ausgleichsabschnitts als ein Gehäuse, in dem die Versorgungsleitungen geschützt einliegen, ist eine sichere und eine verschmutzungsfreie Führung der Versorgungsleitungen auch ohne einen Schutzschlauch möglich. Die Versorgungsleitungen sind im Gehäuse insbesondere gekapselt. Die einzelnen Versorgungsleitungen werden im Inneren des Gehäuses vom/zum axialen Führungsabschnitt geführt. Das vom axialen Führungsabschnitt abgewandte, hintere Ende des Gehäuses begrenzt die Rückführungsbewegung des Schlauchs.

Das Rückstellelement als solches kann beliebig, insbesondere auch elektrisch oder mechanisch, ausgebildet sein. Bei einer mechanischen Ausführung ist ein Ende des Rückstellelements mit dem Führungselement verbunden, während das andere Ende kraftschlüssig an dem Schlauch ansetzt. Bei einer aktiven Bewegung des Schlauches in Längsrichtung wird das mechanische Rückstellelement entweder gespannt oder gedehnt. Die dabei gespeicherte mechanische Energie wird zum Zurückholen des Schlauches bei Entspannung genutzt. Als ein kostengünstiges und effektives mechanisches Rückstellelement wird vorteilhafterweise eine insbesondere metallische Spiralfeder, die den Schlauch umgibt, verwendet.

Die Vorrichtung ist prinzipiell zum Führen eines beliebigen Schlauches geeignet, in welchem ein Bündel von Versorgungsleitungen zusammengefasst ist. Die Vorrichtung ist dabei derart ausgebildet, dass sie für unterschiedlich ausgebildete Industrieroboter, einsetzbar ist. Die Vorrichtung ist daher unabhängig vom jeweiligen Industrierobotertyp.

Das Gehäuse weist erfindungsgemäß eine rechteck- oder U-förmige Geometrie mit einer zwischen den U-Schenkeln aufgespannten Stirnseite auf, an die sich zum einen der axiale Führungsabschnitt anschließt und durch die zum anderen die Versorgungsleitungen in das Gehäuse eingeführt bzw. aus diesem herausgeführt werden. Durch die Ausgestaltung mit im wesentlichen U-förmigen Querschnitt kann unter Berücksichtigung des beabsichtigten Biegeradius der Verlauf des den axialen Führungsabschnitts verlassenden Schlauches oder der Versorgungsleitungen günstig beeinflusst werden. Der aus dem axialen Führungsabschnitt austretende Schlauch oder die austretenden Versorgungsleitungen werden durch das U-förmige Gehäuse um insgesamt 180° geführt und werden dann bevorzugt über eine Schnittstelle fest an die weitergehenden Versorgungsleitungen eines Roboters gekoppelt. Die Schnittstelle ist hierbei üblicherweise fest mit dem Roboter verbunden und weist Anschlussadapter auf, wie beispielsweise Schlauchanschlüsse für Flüssigkeiten oder Gase oder Stecker für eine elektrische Verbindung. Die Rückführbewegungen des Schlauches werden über den Biegeradius der Schlauchkomponenten innerhalb des hohlen Gehäuses kompensiert. Alternativ zu der Durchführung der Versorgungsleitungen an der Stirnseite für die 180°-Umlenkung können je nach gewünschtem Anwendungsfall und Ausgestaltung des Gehäuses Umlenkungen von 90° oder anderen Winkeln eingestellt werden.

Um ein Eindringen von Verschmutzungen zu verhindern, ist zweckdienlicherweise die Stirnseite bis auf eine Öffnung für die Durchführung der Versorgungsleitungen geschlossen. In der Öffnung ist eine Komponentenführung vorgesehen, in der die einzelnen Versorgungsleitungen einzelweise geführt werden und durch die insbesondere eine Abdichtung erfolgt. Dies verhindert das Eindringen von Schweißstaub, Schweißspritzer oder von sonstigen Fremdkörpern. Die Komponentenführung ist hierbei vorteilhafterweise zugleich als ein Zugentlastungselement ausgebildet.

Aufgrund des Längenausgleichs erstreckt sich der Schlauch zumindest ein Teilstück auch in den Ausgleichsabschnitt hinein, bevor die einzelnen Versorgungsleitungen seitlich umgelenkt werden. Um hier ein ungewolltes seitliches Ausbrechen des Schlauchs zu vermeiden und eine vordefinierte Umlenkung zu gewährleisten ist in einer bevorzugten Weiterbildung der Schlauch im Ausgleichsabschnitt in Längsrichtung zumindest ein Teilstück weiter geführt. Insbesondere ist hierzu am Schlauch ein nach Art eines Führungsrings ausgebildeter Führungsadapter angeordnet, der entlang einer axialen Führung innerhalb des Gehäuses verschieblich ist. Dieser ist hierbei zweckdienlicherweise derart ausgebildet, dass er an unterschiedliche Schlauchdurchmesser angepasst werden kann.

Das Führungselement ist erfindungsgemäß aufklappbar und in Form von zumindest zwei miteinander lösbar verbindbaren Halbschalenelementen ausgebildet. Hierdurch ist eine einfache Montage der Versorgungsleitungen sowie ein schneller Austausch der Schlauchkomponenten möglich. Die Halbschalenelemente sind bevorzugt mittels seitlich angebrachten Schnellverschlüssen leicht und schnell zu öffnen oder zu schließen. Den Schnellverschlüssen gegenüberliegend ist bevorzugt ein Scharnier vorgesehen.

Im Hinblick auf die Ausgestaltung des axialen Führungsabschnitts weist dieser gemäß einer ersten Variante vorzugsweise mehrere Führungsstangen auf, zwischen denen der Schlauch geführt ist. Die Führungsstangen bestehen hierbei insbesondere aus Metall oder einem faserverstärkten Kunststoff. Über die zumindest drei Führungsstangen ist ein innerer Schlauchführungsraum definiert, in dem der Schlauch sicher geführt wird. Ein besonderer Vorteil der Ausgestaltung mit den Führungsstangen ist darin zu sehen, dass die effektive Länge dieses axialen Führungsabschnitts sehr einfach in Abhängigkeit der jeweiligen Anforderung des jeweiligen Roboters variiert werden kann. Zur Einstellung der effektiven Länge ist bevorzugt ein entlang der Stangen verschiebliches Widerlager für insbesondere eine Rückstellfeder des Rückstellelements vorgesehen. Das Widerlager kann dabei an beliebigen Positionen der Führungsstangen fixiert werden, so dass sich der Abstand zwischen dem Ausgleichsabschnitt und diesem Widerlager problemlos variieren lässt.

Zweckdienlicherweise sind hierbei die Führungsstangen in einem Halteelement äquidistant, also gleichmäßig über den Umfang verteilt. Das Halteelement ist insbesondere als Haltering ausgebildet, der kreisartige Ausnehmungen aufweist, in die die einzelnen Führungsstangen formschlüssig einschnappbar sind. Durch die von außen einschnappbaren Stangen ist eine einfache Montage oder Demontage ermöglicht.

Zweckdienlicherweise ist das Halteelement zugleich auch als das Widerlager für das Rückstellelement ausgebildet, bietet also eine Doppelfunktion.

Um die Länge des axialen Führungsabschnitts in einfacher Weise einstellen zu können, ist das Halteelement verschieblich an einem fixen Befestigungsbauteil befestigt. Das Befestigungsbauteil ist hierbei ein Montagebauteil am Roboter.

Am dem Halteelement gegenüberliegenden Ende sind die Führungsstangen zweckdienlicherweise am Ausgleichsabschnitt verschieblich gelagert. Hierzu sind insbesondere im Ausgleichsabschnitt Lagerhülsen oder Lagerbuchsen vorgesehen.

Für eine möglichst einfache konstruktive Ausgestaltung umfasst in einer bevorzugten Weiterbildung der Ausgleichsabschnitt zwei aufklappbare Halbschalenelemente, die über ein Scharnierelement miteinander verbunden sind, wobei eine der Führungsstangen einen Scharnierstift des Scharnierelements ausbildet, also ein Teil des Scharnierelements ist.

Um weiterhin eine einfache Anpassung an unterschiedliche Schlauchdurchmesser zu ermöglichen, sind zweckdienlicherweise über die Führungsstangen Adapterhülsen geschoben, die je nach Einsatzgebiet und je nach Durchmesser des Schlauchs unterschiedliche Außendurchmesser aufweisen. Die Adapterhülsen sind aus einem widerstandsfähigen Material, beispielsweise Metall oder ein verschleißarmer Kunststoff. Durch diese Maßnahme wird lediglich ein einziger Typ des durch die Führungsstangen gebildeten axialen Führungselements für die unterschiedlichsten Robotertypen benötigt.

Erfidungsgemäß ist der axiale Führungsabschnitt als geschlossener Rundrohrabschnitt ausgebildet. Auch der Rundrohrabschnitt ermöglicht eine in Längsrichtung stufenlose Einstellung der Montageposition. Zudem ist eine einfache Befestigung des Führungselements mit dem Roboter mittels den Rundrohrabschnitt umgreifenden Schellen möglich.

Zur Führung des Führungsadapters im Ausgleichsabschnitt weist bevorzugt das Gehäuse des Ausgleichsabschnitts seitlich zu seinem im Anschluss an den Rundrohrabschnitt fluchtenden Teilbereich eine reduzierte Innenhöhe auf, so dass für den Schlauch innerhalb des Gehäuses in Längsrichtung eine Führung gebildet ist. Im Hinblick auf die aufklappbare Ausgestaltung des Führungselements sind bevorzugt sowohl der Rundrohrabschnitt als auch der Ausgleichsabschnitt jeweils aus zwei Halbschalenelementen gebildet. Zueinander korrespondierende Halbschalenelemente des Rundrohrabschnitts und des Ausgleichsabschnitts können hierbei als einstückige Einheit ausgebildet sein.

Nachfolgend werden Ausführungsbeispiele der Erfindung anhand einer Zeichnung näher erläutert. Darin zeigen in schematischen und vereinfachten Darstellungen:
- Fig. 1: eine teilweise Seitenansicht eines Roboters mit einer nur teilweise dargestellten Vorrichtung zur Führung von Versorgungsleitungen zu einer Roboterhand,
- Fig. 2: eine teilweise Aufsicht auf einen Roboter mit einer daran angeordneten weiteren Vorrichtung zur Führung von Versorgungsleitungen zu einer Roboterhand,
- Fig. 3: eine Darstellung eines Führungselements mit einem axialen Führungsabschnitt, welcher Führungsstangen aufweist,
- Fig. 4A: ein als Haltering ausgebildetes Halteelement zur Fixierung der Führungsstangen,
- Fig. 4B: eine vergrößerte Querschnittsdarstellung im Bereich des Halteelements, welches zugleich als Widerlager für eine Rückstellfeder ausgebildet ist,
- Fig. 5: eine Explosionsdarstellung des Führungselements gemäß Fig. 3 mit einem aus zwei Halbschalenelementen bestehenden Ausgleichsabschnitt,
- Fig. 6: eine Frontansicht auf die Stirnseite des Ausgleichsabschnittes des Führungselements gemäß den Fig. 3 und 5,
- Fig. 7: das Führungselement gemäß den Fig. 3 und 5 mit über den Führungsstangen geschobenen Adapterhülsen,
- Fig. 8: eine Aufsicht auf eine alternative Ausgestaltung der Vorrichtung, bei der der axiale Führungsabschnitt als ein Rundrohrabschnitt ausgebildet ist,
- Fig. 9: eine perspektivische Darstellung der Vorrichtung nach Fig. 8,
- Fig. 10: eine perspektivische Explosionsdarstellung einer Vorrichtung ähnlich der gemäß den Fig. 8 und 9,
- Fig. 11: eine alternative Ausgestaltung der Vorrichtung mit einem Befestigungsklemmbock zur Aufnahme eines externen Widerlagers.

Gleich wirkende Merkmale sind in den Figuren mit gleichen Bezugszeichen versehen.

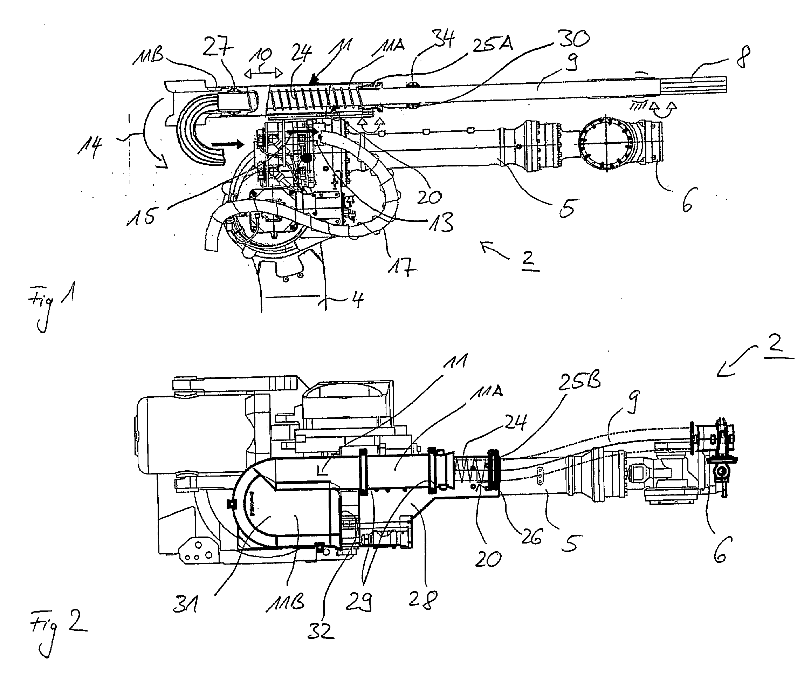

Der in Fig. 1 dargestellte Roboter 2 umfasst eine Schwinge 4, an der ein Roboterarm 5 schwenkbar gelagert ist. Am Ende des Roboterarms 5 ist eine Roboterhand 6 angeordnet, die gegenüber dem Roboterarm 5 um zwei Achsen drehbar ist. An der Roboterhand 6 wird das eigentliche Roboterwerkzeug angeordnet. Dabei kann es sich beispielsweise um ein Schweißgerät handeln. Dem Roboterwerkzeug werden über Versorgungsleitungen 8 die benötigte elektrische Energie sowie Steuersignale und Arbeitsmittel, wie z.B. Schweißgas oder Kühlmittel zugeführt. Die Versorgungsleitungen 8 sind als Schlauchkomponenten in einem insbesondere als Wellrohr ausgebildeten Schutzschlauch 9 zusammengefasst. Dieser wird in einer Vorrichtung mit einem Führungselement 11 geführt. Dieses ist bevorzugt aus einem nicht leitenden isolierenden Material und besteht insgesamt aus Kunststoff.

Da die Versorgungsleitungen 8 fest mit dem Roboterwerkzeug verbunden sein müssen, führt eine Bewegung der Roboterhand 6 zu einer Längenausgleichsbewegung der Versorgungsleitungen 8 und damit des Schutzschlauches 9. Der Schutzschlauch 9 bewegt sich in der Vorrichtung entlang seiner Längsrichtung entsprechend vor oder zurück. Diese Bewegung ist durch den Pfeil 10 verdeutlicht.

Der Schutzschlauch 9 ist im Inneren des Führungselements 11 in seiner Längsrichtung, die der Pfeilrichtung des Pfeils 10 entspricht, bewegbar geführt.

Das Führungselement 11 umfasst einen axialen Führungsabschnitt 11A sowie einen sich daran anschließenden Umlenk- oder Ausgleichsabschnitt 11 B. Im Ausführungsbeispiel der Fig. 1 ist der axiale Führungsabschnitt 11A als ein Rundrohrabschnitt ausgebildet, der über seine gesamte Länge vollumfänglich geschlossen ist. Lediglich zur besseren Darstellung des darin geführten Schutzschlauchs 9 ist in Fig. 1 das Führungselement 11 mit dem Rundrohrabschnitt teilweise aufgerissen dargestellt. Der Schutzschlauch 9 tritt aus dem axialen Führungsabschnitt 11A in den Ausgleichsabschnitt 11 B über. Im Bereich des Ausgleichabschnitts 11B treten die Versorgungsleitungen bogenförmig aus dem Schutzschlauch 9 aus und werden - gekennzeichnet durch den Pfeil 14 - seitlich weggeführt. Die - in Fig. 1 zu Zwecken der besseren Übersicht unterbrochen dargestellten - Versorgungsleitungen 8 werden über eine Schnittstelle 13 in hier nicht näher dargestellter Weise mit an der Schwinge 4 des Roboters 2 angeordneten Leitungen gekoppelt. Diese, durch den Pfeil 15 gekennzeichneten und ebenfalls nicht näher dargestellten Leitungen sind in einer Führung 17 entlang der Schwinge 4 flexibel angeordnet. Die flexible Führung 17 erlaubt die Schwenkung des Roboterarms 5 gegenüber der Schwinge 4.

Das Führungselement 11 umfasst ein mechanisches Rückstellelement 20, das für eine Zuführung oder Rückholung des Schutzschlauches 9 aus bzw. in die Vorrichtung entsprechend der Bewegung der Roboterhand 6 sorgt und somit den Schutzschlauch 9 und die Versorgungsleitungen 8 zwischen dem Führungselement 11 und der Roboterhand 6 in einer gewünschten Spannung hält. Mit anderen Worten ermöglicht das Rückstellelement 20 eine variable aktive Länge des Schutzschlauches 9. Das Führungselement 11 selbst ist mittels eines Befestigungselements, beispielsweise eine Montageplatte, am Roboterarm 5 oberhalb der Schwenkachse zur Schwinge 4 ortsfest gehalten.

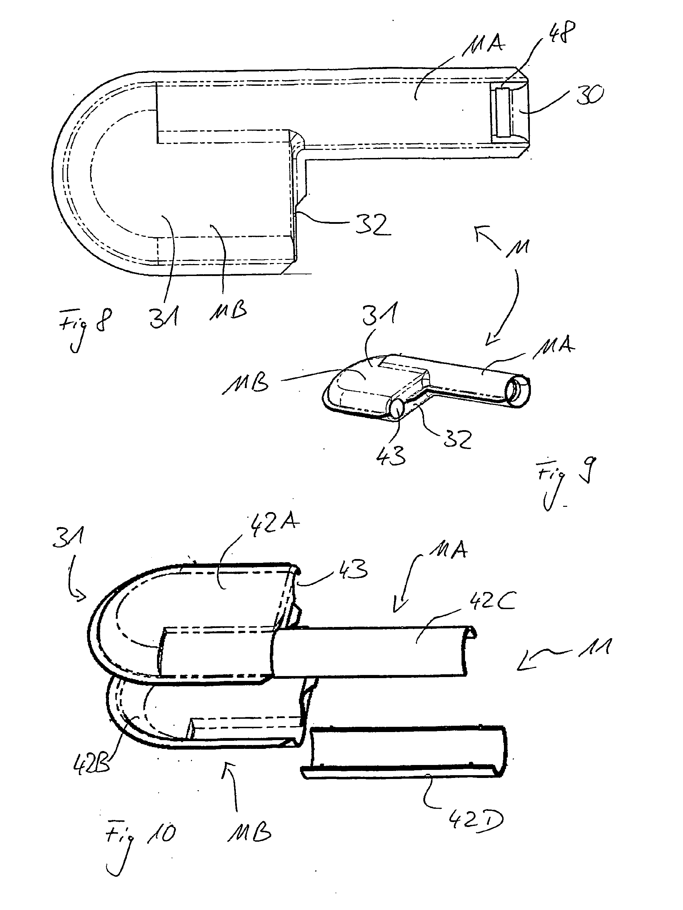

Das Rückstellelement 20 umfasst eine metallische Spiralfeder 24 sowie ein im Führungselement 11 integriertes internes Widerlager 25A und einen Führungsadapter 27. Das interne Widerlager 25A ist in einer Austrittsöffnung 30 des Führungselements 11 fixiert. Hierzu greift eine wulstartige Umfangsverdickung des Widerlagers 25A in eine entsprechende nutartig Ausnehmung des Innenumfangs des Führungselements 11 ein (vgl. Fig. 8).

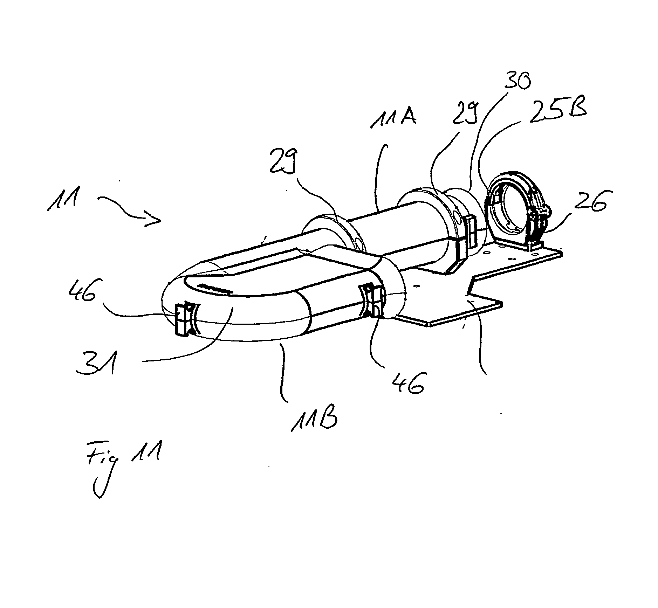

In der alternativen Ausgestaltung der Fig. 2 ist ein externes Widerlager 25B außerhalb des Führungselements 11 vorgesehen, das von einem nach Art einer Rohrschelle ausgebildeten Befestigungsklemmblock 26 gehalten wird. Der Befestigungsklemmblock 26 ist wiederum auf einer Befestigungsplatte 28 angeordnet. Auf dieser sind Rohrschellen 29 befestigt, die den axialen Führungsabschnitt 11A umgreifen. Die Befestigung der gesamten Vorrichtung am Roboter 2 erfolgt vorzugsweise lediglich über die Befestigungsplatte 28. Der spezielle Aufbau des in Fig. 2 dargestellten Führungselements 11 ergibt sich im Detail auch aus Fig. 11.

In beiden Ausführungsvarianten umgreift die Spiralfeder 24 locker den Schutzschlauch 9 und ist kraftschlüssig mit dem ringförmigen Widerlager 25A,B verbunden. Der Schutzschlauch 9 selbst gleitet durch das Widerlager 25A,B hindurch. Das andere Ende der Spiralfeder 24 ist mit dem ebenfalls ringförmigen Führungsadapter 27 verbunden, der über den Schutzschlauch 9 geschoben und an der gewünschten Montageposition mit dem Schutzschlauch 9 fest verbunden ist. Über die Montageposition ist dabei die gewünschte Federspannung einstellbar. Der Außendurchmesser des Führungsadapters 27 ist auf den Innendurchmesser des axialen Führungsabschnitts 11A sowie dessen Fortsetzung im Ausgleichsabschnitt 11 B abgestimmt, so dass der Führungsadapter 27 im Führungselement 11 in Längsrichtung gleiten kann. Für diese Gleitbewegung weist die Spiralfeder 24 einen gegenüber dem Innendurchmesser des axialen Führungsabschnitts 11A kleineren Außendurchmesser auf. Über Führungsadapter 27 mit verschiedenen Innendurchmessern ist eine einfache Anpassung für die Führung von Schläuchen mit verschiedenen Außendurchmessern möglich. Entsprechend kann auch das Widerlager 25A,B angepasst werden.

Die Anordnung des externen Widerlagers 25B ist insbesondere im Hinblick an eine problemlose Anpassung an unterschiedliche Außendurchmesser verschiedener Schutzschläuche 9 von Vorteil. Das Widerlager 25B wird hierzu in einfacher Weise an den jeweiligen Außendurchmesser angepasst. Hierzu wird beispielsweise in den Befestigungsklemmblock 26 ein angepasstes Reduzierstück, das zugleich die Funktion des Widerlagers 25B übernimmt, eingelegt.

Um bei einer Rückholbewegung der Spiralfeder 24 den Weg des Schutzschlauches 9 zuverlässig zu begrenzen, ist auf diesem ein Anschlag 34 montiert.

Verlängert sich durch eine Dreh- oder Vorwärtsbewegung der Roboterhand 6 die aktive Länge des Schutzschlauches 9, so wird die Spiralfeder 24 in dem Führungselement 11 gestaucht. Es baut sich durch Federspannung eine entgegengerichtete Kraft auf. Bei Verkürzung der aktiven Länge durch Zurückdrehen oder Zurückbewegen der Roboterhand 6 entspannt sich die Spiralfeder'24 und holt den Schutzschlauch 9 über die Austrittsöffnung 30 zurück.

Für einen zuverlässigen und störungsfreien Betrieb ist eine sichere Führung der Versorgungsleitungen 8 vom im Bereich des Führungsadapters 27 gelegenen Ende des Schutzschlauches 9 zu der Schnittstelle 13 notwendig. Aufgrund der Längsbewegung des Schutzschlauchs 9 in axialer Richtung ist es erforderlich, dass die bogenförmige Auslenkung der Versorgungsleitungen 8 ebenfalls über einen axialen Teilabschnitt hinweg zum erforderlichen Längenausgleich mitwandern kann. Um hier eine sichere und zuverlässige Führung zu ermöglichen, ist der Ausgleichsabschnitt 11 B des Führungselements 11 vorgesehen. Der Ausgleichsabschnitt 11 B ist hierzu als ein im Wesentlichen U-förmiges Gehäuse 31 ausgebildet, an dessen Stirnseite 32 zum einen das axiale Führungselement 11A angeschlossen ist und zum anderen die Versorgungsleitungen 8 austreten. Das axiale Führungselement 11A erstreckt sich insbesondere ein Teilstück in den Ausgleichsabschnitt 11 B hinein, um im Bereich des Teilstücks weiterhin eine sichere axiale Führung des Schutzschlauches 9 zu gewährleisten. Gleichzeitig ist die axiale Führung innerhalb des Ausgleichsabschnitts 11 B derart ausgebildet, dass auch über das Teilstück hinweg die Versorgungsleitungen zur Seite hin in den Innenraum des Gehäuses 31 austreten können.

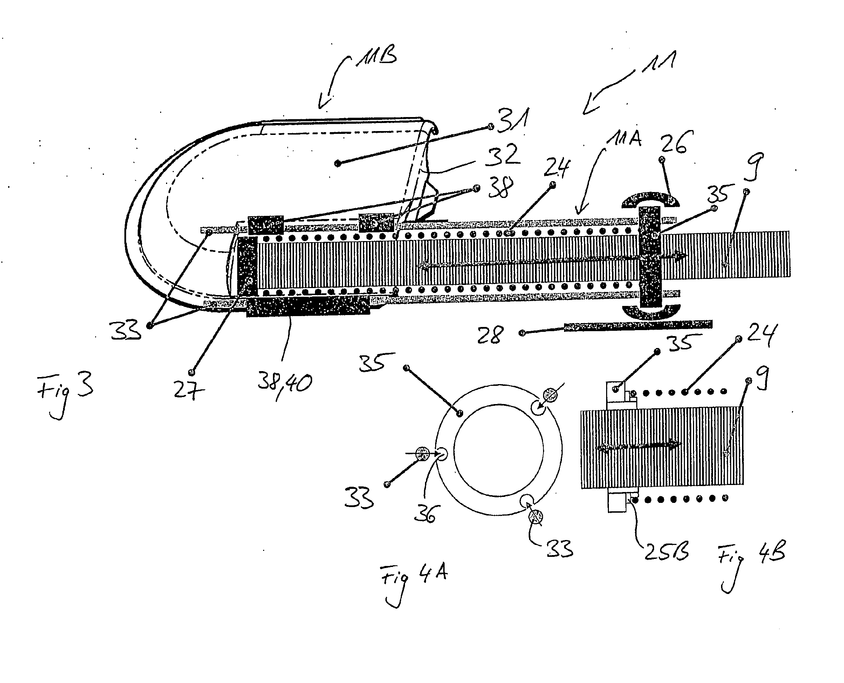

Unterschiedliche Ausführungsvarianten des Führungselements 11 werden nachfolgend anhand der Fig. 3 bis 11 dargestellt.

Bei einer ersten prinzipiellen Ausführungsvariante, wie sie gemäß den Fig. 3 bis 7 dargestellt ist, umfasst das axiale Führungselement 11A drei um 120° zueinander beabstandete Führungsstangen 33, welche in einem ringförmigen Halteelement 35 fixiert sind. Hierzu sind die einzelnen Führungsstangen 33 in entsprechende Aufnahmen 36 am Halteelement 35 von außen eingeschnappt und darin formschlüssig gehalten, wie sich insbesondere aus der Fig. 4A ergibt. Das Halteelement 35 ist insgesamt als ein Systemhalter ausgebildet, welcher zugleich auch als ein Widerlager 25A für die Spiralfeder 24 dient und hierzu einen Anschlag aufweist, wie sich aus der Fig. 4B ergibt.

Der als Wellrohr ausgebildete Schutzschlauch 9 ist durch das Halteelement 35 hindurch und damit im von den Führungsstangen 33 aufgespannten Raum geführt. Gleichzeitig liegt die Spiralfeder 24 zwischen den Führungsstangen 33 und dem Schutzschlauch 9 an und stützt sich am Führungsadapter 27 ab. Das Halteelement 35 ist wiederum in dem nach Art einer Schelle ausgebildeten und aufklappbaren Befestigungsklemmenblock 26 gehalten. Dieser ist auf einer Montageeinrichtung oder Befestigungsbauteil, insbesondere auf der Montage- oder Befestigungsplatte 28, verschieblich befestigt.

Die Führungsstangen 33 erstrecken sich ein axiales Teilstück in den Ausgleichsabschnitt 11 B hinein und gewährleisten somit innerhalb des Ausgleichsabschnitts 11 B weiterhin eine sichere axiale Führung des Schutzschlauches 9. Im Ausgleichsabschnitt 11 B sind hierzu Lagerhülsen 38 vorgesehen, durch die die Stangen 33 geführt sind. In den Lagerhülsen 38 sind die Stangen 33 lose gelagert, so dass hier eine axiale Beweglichkeit zum Längenausgleich gegeben ist.

Alternativ zu der in der Figur dargestellten stabartigen Ausbildung der Führungsstangen 33 können diese oder zumindest eine hiervon auch nach Art einer Teleskopstange ausgebildet sein, die zugleich das Rückstellelement bildet, also insbesondere mit einem innen liegenden Federelement versehen ist. In diesem Fall kann auf die Spiralfeder 24 verzichtet werden.

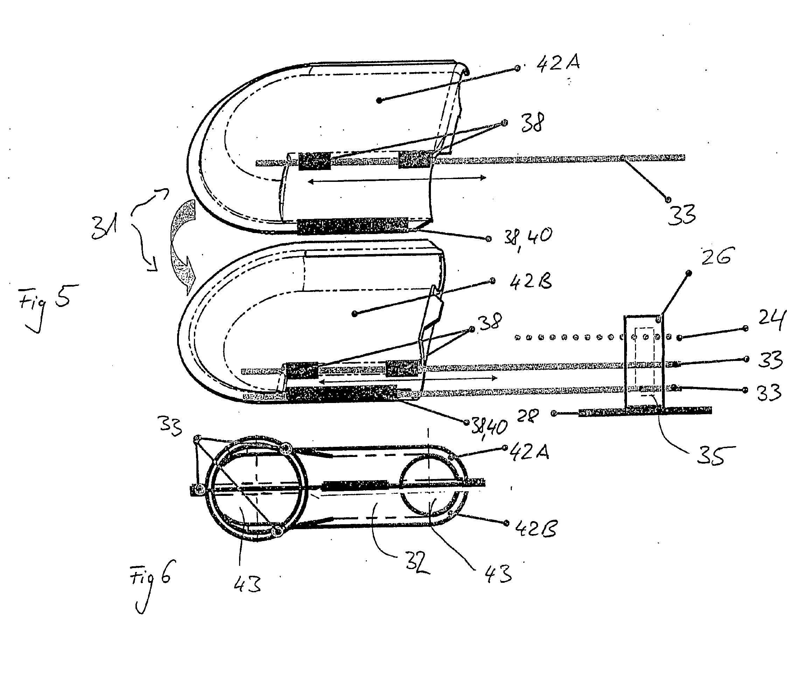

Aus den Fig. 5 und 6 ist der doppelschalige Aufbau des Ausgleichsabschnitts 11 B gut zu erkennen. Und zwar weist das Gehäuse 31 ein oberes Halbschalenelement 42A und ein unteres Halbschalenelement 42B auf. Die beiden Halbschalenelemente 42A,B sind über ein Scharnier miteinander verbunden. Dieses ist gebildet durch jeweilige Scharnierelemente 40 an den beiden Halbschalenelementen 42A,B sowie durch eine der Führungsstangen 33, die quasi einen Scharnierstift bildet und durch die als Lagerhülsen wirkenden Scharnierelemente 40 geführt. Ist. Die zweischalige Ausgestaltung mit der Aufklappbarkeit über das Scharnier ermöglicht eine besonders einfache Montage und Einlegen des Schutzschlauches 9 mit den Versorgungsleitungen 8 in das Führungselement 11. Auch ist durch die Aufklappbarkeit ein einfacher Austausch eines beschädigten Schlauches 9 oder einer schadhaften Versorgungsleitung 8 ermöglicht. Auf Seiten des axialen Führungselements 11A wird die Aufklappbarkeit dadurch unterstützt, dass die Führungsstangen im Halteelement 35 lediglich eingerastet oder eingeklipst sind, also problemlos aus dem Halteelement entfernt werden können.

Wie insbesondere aus der Aufsicht auf die Stirnseite 32 des Gehäuses 31 gemäß Fig. 6 zu entnehmen ist, ist die Stirnseite 32 geschlossen ausgebildet und weist lediglich Öffnungen 43 für den Eintritt des Schutzschlauches 9 (linke Bildhälfte) bzw. für den Austritt der Versorgungsleitungen 8 (rechte Bildhälfte) auf. Die Eintrittsseite ist hierbei durch das axiale Führungselement 11A festgelegt. Durch den zumindest weitgehend geschlossenen Gehäuseinnenraum werden die aus dem axialen Führungsabschnitt 11A austretenden Komponenten gekapselt und gegen Verunreinigungen geschützt. Alternativ kann die Stirnseite auch vollständig offen sein. Die Versorgungsleitungen 8 werden in einem Bogen innerhalb des Gehäuses 31 nach vorn zu der Stirnseite 32 geführt. Der durch die U-förmige Ausgestaltung des Gehäuses definierte Bogen begrenzt den Biegeradius der Versorgungsleitungen 8 bzw. des Schlauches. Im Anschlussbereich des axialen Führungselements 11A weist das Gehäuse in Fortführung des axialen Führungsabschnitts 11A einen in etwa kreisrunden Durchmesser auf, welcher sich zur Seite hin durch eingezogene Gehäusewände verjüngt, so dass bereits durch die Gehäusegeometrie eine axiale Führung in einem Teilstück des Ausgleichselements 11 B ausgebildet ist. Zusätzlich wird bei der Ausführungsvariante gemäß den Fig. 3 bis 7 die axiale Führung im Ausgleichsabschnitt 11 B durch die Führungsstangen 33 gewährleistet.

In der Öffnung 43 für die Versorgungsleitungen 8 ist zweckdienlicherweise weiterhin ein Einsatz zur einzelweisen Führung der Versorgungsleitungen 8 vorgesehen. Der Einsatz ist dabei zugleich als Dichtelement ausgebildet, um das Gehäuse 31 vor Eindringen von Schmutzpartikeln zu schützen, um einen störungsfreien Betrieb zu gewährleisten.

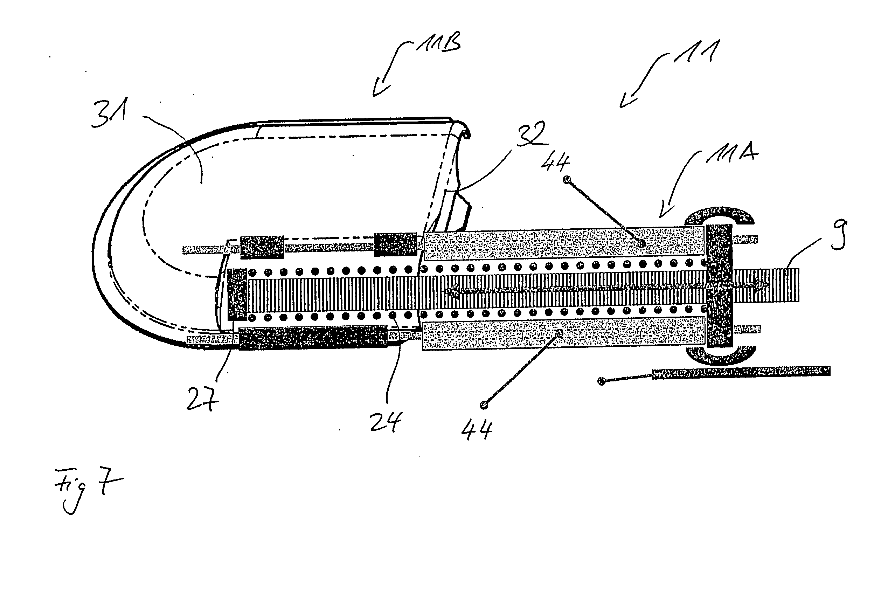

In Abwandlung der Ausgestaltung gemäß den Fig. 3 oder 5 sind bei der Variante gemäß Fig. 7 auf die Führungsstangen 33 Adapterhülsen 44 aufgesteckt, die für eine Reduzierung des freien Innendurchmessers des axialen Führungselements 11A sorgen. Durch die Adapterhülsen 44 ist daher in einfacher Weise eine Anpassung an unterschiedliche Schlauchdurchmesser ermöglicht, so dass das Führungselement 11 universell für die unterschiedlichsten Schlauch- und Robotertypen eingesetzt werden kann. Insgesamt ist die Anpassung an unterschiedliche Schlauchdurchmesser durch unterschiedliche Maßnahmen möglich. Die Adapter- oder Anpasselemente sind insbesondere der Führungsadapter 27, das Widerlager 25A,B mit unterschiedlichen Innendurchmessern sowie die Adapterhülsen 44.

In den Fig. 8 bis 11 sind unterschiedliche Varianten einer zweiten prinzipiellen Ausgestaltung des Führungselements 11 dargestellt. Und zwar ist in diesen Varianten der axiale Führungsabschnitt 11 B als ein zumindest über einen axialen Teilbereich hinweg geschlossener Rundrohrabschnitt ausgebildet. Dieser Rundrohrabschnitt ist durch die spezielle Geometrie des Gehäuses 31 im axialen Ausgleichsabschnitt 11 B in etwa fortgeführt, um die axiale Führung des Schlauches 9 auch innerhalb des Ausgleichsabschnitts 11 B über ein axiales Teilstück hinweg zu gewährleisten. Gleichzeitig ist innerhalb dieses axialen Teilstückes ein seitliches Umlenken der einzelnen Versorgungsleitungen 8 zur Öffnung 43 hin möglich. Hierzu verringert sich die Innenhöhe des Gehäuses 31 zu seiner Mitte hin.

Wie insbesondere aus den Fig. 8 und 11 zu entnehmen ist, sind die Aus- bzw. Eintrittsöffnungen 43 für den Schlauch 9 bzw. die Versorgungsleitungen 8 aus bzw. in das Führungselement 11 mit gerundeten Ein- und Austrittskanten versehen und in etwa trompetenförmig ausgebildet, um ein schonendes Zu- bzw. Ausführen des Schutzschlauches 9 bzw. der Versorgungsleitungen 8 zu gewährleisten. Bei der Ausführungsvariante gemäß Fig. 8 ist in der Austrittsöffnung 30 eine Nut 48 angebracht, die zur Aufnahme des internen Widerlagers 25A vorgesehen ist. Die Austrittsöffnung 30 ist daher durch das interne Widerlager 25A gebildet, welches als ein separat gefertigtes Teil, insbesondere Drehteil, mit dem Rundrohrabschnitt fest verbunden, insbesondere verschweißt ist. In die Nut 48 kann ein Reduzierstück formschlüssig eingesetzt werden, über das eine Anpassung an den jeweiligen Außendurchmesser des Schutzschlauches 9 vorgenommen wird.

Das Führungselement 11 ist für eine einfache Montage wiederum schalenartig ausgebildet, wie insbesondere der Fig. 10 zu entnehmen ist. Neben dem Ausgleichsabschnitt 11B ist auch der Rundrohrabschnitt aus Halbschalen gebildet, wobei im Ausführungsbeispiel vorgesehen ist, dass die obere Halbschale 42A des Ausgleichsabschnitts 11 B mit einer oberen Halbschale 42C des Rundrohrabschnitts einstückig ausgebildet ist, wohingegen ein unteres Halbschalenelement 42D des Rundrohrabschnitts als separates Schalelement ausgebildet ist. Die einzelnen Schalenelemente sind durch Schnellverschlüsse 46 (vgl. Fig. 11) miteinander verbunden. Gemäß Fig. 11 ist das Führungselement 11 über die Rohrschellen 29 an der Befestigungsplatte 28 befestigt. Durch die getrennte Halbschale 42D lässt sich die untere Halbschale 42B des Ausgleichsabschnitts 11 B in einfacher Weise abnehmen, ohne dass das Führungselement 11 von der Befestigungsplatte 28 und damit vom Roboter demontiert werden muss. Durch Verschieben des Rundrohrabschnitts gegenüber den Rohrschellen 29 ist vor endgültiger Befestigung zudem eine stufenlose Einstellung der Montageposition ermöglicht.

Wie bereits im Zusammenhang mit der Fig. 2 erläutert, bei der das Führungselement gemäß Fig. 11 eingesetzt ist, weist das Führungselement 11 das externe Widerlager 25B auf, welches ebenfalls auf der Befestigungsplatte 28 beabstandet von der Austrittsöffnung 30 in dem schellenartigen Befestigungsklemmblock 26 gehalten ist.

### Bezugszeichenliste

- 2: Roboter
- 4: Schwinge
- 8: Versorgungsleitung
- 9: Schutzschlauch
- 10: Pfeil
- 11: Führungselement
- 11A: axialer Führungsabschnitt
- 11B: Ausgleichsabschnitt
- 13: Schnittstelle
- 14: Pfeil
- 15: Pfeil
- 17: Führung
- 20: Rückstellmittel
- 24: Spiralfeder
- 25A: internes Widerlager
- 25B: externes Widerlager
- 26: Befestigungsklemmblock
- 27: Führungsadapter
- 28: Befestigungselement
- 29: Rohrschelle
- 30: Austrittsöffnung
- 31: Gehäuse
- 32: Stirnseite
- 33: Führungsstange
- 34: Anschlag
- 35: Halteelement
- 36: Ausnahme
- 38: Lagerhülsen
- 40: Scharnierelement
- 42A-D: Halbschalenelemente
- 43: Öffnung
- 44: Adapterhülse
- 46: Schnellverschluss
- 48: Nut

## Patentansprüche

1. Vorrichtung zum Führen eines mehrere Versorgungsleitungen (8) aufweisenden Schlauches (9) eines Industrieroboters (2), mit einem Führungselement (11), in welchem der Schlauch (9) beweglich gegen die Rückstellkraft eines Rückstellelements (20) führbar ist, wobei das Führungselement (11) einen als Rundrohrabschnitt ausgebildeten axialen Führungsabschnitt (11A) für eine Führung des Schlauches (9) in dessen Längsrichtung sowie einen sich an den Führungsabschnitt (11A) anschließenden durch ein Gehäuse (31) gebildeten Ausgleichsabschnitt (11 B) aufweist, der derart ausgebildet ist, dass im Gehäuse (31) ein - in Bezug auf die Längsrichtung - seitliches Umlenken der Versorgungsleitung (8) über ein axiales Teilstück hinweg ermöglicht ist.
**dadurch gekennzeichnet,**
**dass**
- das Gehäuse (31) eine im wesentlichen rechteck- oder U-förmige Geometrie mit einer zwischen den U-Schenkeln aufgespannten Stirnseite (32) aufweist, an die sich einerseits der axiale Führungsabschnitt (11A) anschließt und aus der andererseites die Versorgungsleitungen (8) herausgeführt sind,
- die Versorgungsleitungen einzelweise durch eine in einer Öffnung (43) des Gehäuses (31) angeordnete Komponentenführung zu einer Schnittstelle (13) geführt sind, an der sie an weitergehende Versorgungsleitungen des Industrieroboters (2) über Anschlussadapter koppelbar sind,
- das Führungselement (11) aufklappbar ausgebildet ist und aus zwei einstückigen Halbschalenelementen gebildet ist.

2. Vorrichtung nach Anspruch 1,
dass das Gehäuse (31) bis auf **dadurch gekennzeichnet**, die Öffnung (43) in der Stirnseite zur Durchführung der Versorgungsleitung (8) geschlossen ist.

3. Vorrichtung nach einem der vorhergehenden Ansprüche,
**dadurch gekennzeichnet,**
**dass** im Ausgleichsabschnitt (11 B) der Schlauch (9) in Längsrichtung weitergeführt ist.

4. Vorrichtung nach einem der vorhergehenden Ansprüche,
**dadurch gekennzeichnet,**
**dass** der axiale Führungsabschnitt (11) mehrere Führungsstangen (33) aufweist, zwischen denen der Schlauch (9) geführt ist.

5. Vorrichtung nach Anspruch 4,
**dadurch gekennzeichnet,**
**dass** die Führungsstangen (33) in einem Halteelement (35) äquidistant zueinander gehalten sind.

6. Vorrichtung nach Anspruch 5,
**dadurch gekennzeichnet,**
**dass** das Halteelelement (35) zugleich als ein Widerlager (25A) des Rückstellelements (20) ausgebildet ist.

7. Vorrichtung nach Anspruch 5 oder 6,
**dadurch gekennzeichnet,**
**dass** das Halteelement (35) verschieblich an einem Befestigungsbauteil (28) befestigt ist.

8. Vorrichtung nach einem der Ansprüche 4 bis 7,
**dadurch gekennzeichnet,**
**dass** die Führungsstangen (33) endseitig am Ausgleichsabschnitt (11B) verschieblich gelagert sind.

9. Vorrichtung nach einem der Ansprüche 4 bis 8,
**dadurch gekennzeichnet,**
**dass** der Ausgleichsabschnitt (11 B) zwei aufklappbare Halbschalenelemente (42A,42B) umfasst, die über ein Scharnierelement (4) miteinander verbunden sind, wobei eine der Führungsstangen (33) einen Schamierstift ausbildet.

10. Vorrichtung nach einem der Ansprüche 4 bis 9,
**dadurch gekennzeichnet,**
**dass** um die Führungsstangen (33) jeweils zumindes eine Adapterhülse (44) angeordnet ist.

11. Industrieroboter (2) mit einer Vorrichtung nach einem der vorhergehenden Ansprüche.

## Claims

1. Device for guiding a hose (9), having a plurality of supply lines (8) of an industrial robot (2), with a guide element (11) in which the hose (9) can move against the restoring force of a restoring element (20), the guide element (11) having an axial guide segment (11A), designed as a segment of round pipe, for guiding the hose (9) in its longitudinal direction as well as a compensation segment (11B) adjoining the guide segment (11A) and formed by a housing (31), configured such that a lateral deflection of the supply line (8) -in relation to the longitudinal direction - is made possible in the housing (31) across an axial section, **characterized in that**
- the housing (31) has an essentially rectangular or U-shaped geometry with an end face (32) subtended between the legs of the U, where, on the one hand, the axial guide segment (11A) is joined and from which, on the other hand, the supply lines are (8) led out,
- the supply lines are led individually through a component guide, arranged in an opening (43) of the housing (31), to an interface (13), at which they can be coupled to onward leading supply lines of the industrial robot (2) via connection adapters,
- the guide element (11) is designed to be able to swing open and is formed from two single-piece half-shell elements.

2. Device according to Claim 1, **characterized in that** the housing (31) is closed except for the opening (43) in the end face to lead through the supply line (8).

3. Device according to one of the preceding claims, **characterized in that** the hose (9) is taken further in the longitudinal direction in the compensation segment (11B).

4. Device according to one of the preceding claims, **characterized in that** the axial guide segment (11) has several guide rods (33), between which the hose (9) is led.

5. Device according to Claim 4, **characterized in that** the guide rods (33) are held an equal distance apart from each other in a holding element (35).

6. Device according to Claim 5, **characterized in that** the holding element (35) is designed at the same time as an abutment (25A) for the restoring element (20).

7. Device according to Claim 5 or 6, **characterized in that** the holding element (35) is fastened to a securing part (28) such that it can slide.

8. Device according to one of Claims 4 to 7, **characterized in that** the guide rods (33) at their end are mounted on the compensation segment (11B) so that they can slide.

9. Device according to one of Claims 4 to 8, **characterized in that** the compensation segment (11B) has two hinged half-shell elements (42A, 42B), joined together by a hinge element (4), and one of the guide rods (33) forms a hinge pin.

10. Device according to one of Claims 4 to 9, **characterized in that** at least one adapter sleeve (44) is arranged around each of the guide rods (33).

11. Industrial robot (2) with a device according to one of the preceding claims.

## Revendications

1. Dispositif pour guider un tuyau (9) présentant plusieurs conduites d'alimentation (8) d'un robot industriel (2), comprenant un élément de guidage (11) dans lequel le tuyau (9) peut être guidé de manière déplaçable à l'encontre de la force de rappel d'un élément de rappel (20), l'élément de guidage (11) présentant une portion de guidage axiale (11A) réalisée sous forme de portion tubulaire ronde, pour un guidage du tuyau (9) dans sa direction longitudinale, ainsi qu'une portion de compensation (11B) formée par un boîtier (31) et se raccordant à la portion de guidage (11A), laquelle portion de compensation est réalisée de telle sorte qu'une déviation latérale - par rapport à la direction longitudinale - de la conduite d'alimentation (8) dans le boîtier (31) au-delà d'une distance partielle axiale soit possible,
**caractérisé en ce que**
- le boîtier (31) présente une géométrie essentiellement rectangulaire ou en forme de U avec un côté frontal (32) s'étendant entre les branches du U, auquel se raccorde d'une part la portion de guidage axiale (11A) et hors duquel sont d'autre part guidées les conduites d'alimentation (8),
- les conduites d'alimentation sont guidées individuellement par un guidage de composant disposé dans une ouverture (43) du boîtier (31) jusqu'à une interface (13) au niveau de laquelle elles peuvent être accouplées à des conduites d'alimentation prolongées du robot industriel (2) par le biais d'adaptateurs de raccordement,
- l'élément de guidage (11) est réalisé de manière à pouvoir être enclipsé par le dessus et se compose de deux éléments de demi-coque d'une seule pièce.

2. Dispositif selon la revendication 1,
**caractérisé en ce que**
le boîtier (31) est fermé à l'exception de l'ouverture (43) dans le côté frontal pour le passage de la conduite d'alimentation (8).

3. Dispositif selon l'une quelconque des revendications précédentes,
**caractérisé en ce que**
le tuyau (9) est guidé de manière prolongée dans la direction longitudinale dans la portion de compensation (11B).

4. Dispositif selon l'une quelconque des revendications précédentes,
**caractérisé en ce que**
la portion de guidage axiale (11) présente plusieurs tiges de guidage (33) entre lesquelles est guidé le tuyau (9).

5. Dispositif selon la revendication 4,
**caractérisé en ce que**
les tiges de guidage (33) sont maintenues de manière équidistante les unes par rapport aux autres dans un élément de retenue (35).

6. Dispositif selon la revendication 5,
**caractérisé en ce que**
l'élément de retenue (35) est réalisé en même temps sous forme de butée (25A) de l'élément de rappel (20).

7. Dispositif selon la revendication 5 ou 6,
**caractérisé en ce que**
l'élément de retenue (35) est fixé de manière déplaçable à un composant de fixation (28).

8. Dispositif selon l'une quelconque des revendications 4 à 7,
**caractérisé en ce que**
les tiges de guidage (33) sont supportées de manière déplaçable du côté de l'extrémité sur la portion de compensation (11B).

9. Dispositif selon l'une quelconque des revendications 4 à 8,
**caractérisé en ce que**
la portion de compensation (11B) comprend deux éléments de demi-coque rabattables (42A, 42B) qui sont connectés l'un à l'autre par le biais d'un élément charnière (4), l'une des tiges de guidage (33) constituant une goupille de charnière.

10. Dispositif selon l'une quelconque des revendications 4 à 9,
**caractérisé en ce**
**qu'**au moins une douille d'adaptateur (44) est disposée à chaque fois autour des tiges de guidage (33).

11. Robot industriel (2) comprenant un dispositif selon l'une quelconque des revendications précédentes.
